# EUROPEAN PATENT APPLICATION

(11) **EP 4 813 962 A1**
(43) Date of publication of application: **30.09.2026**
(21) Application number: 26160018.3
(22) Date of filing: 23.02.2026
(51) Int. Cl.: C05B 17/00, C03C 4/00, C05D 9/00

(54) **MARINE GLASS FERTILIZER COMPOSITION BASED ON CONVERTER SLAG**

(30) Priority: 28.03.2025 KR 20250040694; 04.08.2025 KR 20250106358
(71) Applicant: LG Electronics Inc., Yeongdeungpo-gu Seoul 07336 (KR); POSTECH Research and Business Development Foundation, Pohang-si, Gyeongsangbuk-do 37673 (KR)
(72) Inventor: CHOI, Wongyu, 07796 Seoul (KR); KIM, Namjin, 07796 Seoul (KR); KIM, Young Seok, 07796 Seoul (KR); LEE, Jisun, 37673 Pohang-si (KR); CHO, Jung Wook, 37673 Pohang-si (KR); KIM, Seonjin, 37673 Pohang-si (KR)
(74) Representative: Schott, Jakob Valentin

(57) **Abstract**

The present disclosure discloses a marine glass fertilizer composition based on converter slag. More specifically, the present disclosure discloses a marine glass fertilizer composition based on converter slag, which may serve as an eco-friendly source of iron, which uses a converter slag, which is a byproduct of the steel industry, to restore the marine ecosystem and promote the growth of marine plankton.

## Description

### BACKGROUND

### [Technical Field]

The present disclosure relates to a marine glass fertilizer composition based on converter slag, and more specifically, to a marine glass fertilizer composition based on converter slag, which may serve as an eco-friendly source of iron, which uses a converter slag, which is a byproduct of the steel industry, to restore the marine ecosystem and promote the growth of marine plank.

### [Description of the Related Art]

Recently, rising sea temperatures due to climate changes, marine pollution caused by excessive landfill and coastal development, and a decline in nutrients have significantly impacted coastal ecosystems. In particular, coastal desertification, which is causing the loss of habitats for seaweed and seagrass, is becoming increasingly serious.

Among inorganic nutrients, iron (Fe) is essential for the photosynthesis and growth of phototrophic organisms, including seaweed and seagrass, and its deficiency causes problems such as growth and proliferation inhibition, thereby reducing aquaculture production.

In order to dramatically increase aquaculture production, the creation of artificial underwater forests is becoming increasingly important. Most of the materials used to build these underwater forests and artificial reefs have been cement concrete. These cement-concrete artificial reefs are primarily formed of natural sand, natural ground stone aggregate, and Portland cement.

However, the Portland cement has been identified as a cause of social problems such as "waste cement" and "atopic apartments," and is considered unsuitable for the construction of artificial reefs used to restore marine ecosystems. In response, attempts have been made to use slag cement, but as the slag cement is also a mixed cement formed of Portland cement, it is difficult to completely avoid the problems associated with its use.

Accordingly, the present disclosure proposes a marine ecosystem restoration solution that can maximize the use rate of slag by not containing cement components and not containing any additives other than silicates and phosphates for glass manufacturing.

### Documents of Related Art

### [Patent Document]

(Patent Document 1) Korean Patent Registration No. 10-1199870 (November 9, 2012)

### [SUMMARY OF THE DISCLOSURE]

The present disclosure is directed to providing a marine glass fertilizer composition based on converter slag, which serves as an eco-friendly source of iron, which uses a converter slag, which is a byproduct of the steel industry, to restore the marine ecosystem and promote the growth of marine plankton.

The present disclosure is also directed to providing a marine glass fertilizer composition based on converter slag, which is designed to supply iron to seawater for a long time based on a glass structure in which converter slag powder obtained by grinding converter slag generated during a steelmaking process is mixed with a silicate or phosphate.

The present disclosure is also directed to providing a marine glass fertilizer composition based on converter slag, which can promote the growth of phytoplankton through iron supply and contribute to the absorption of carbon dioxide in the atmosphere through blue carbon.

Objects of the present disclosure are not limited to the above objects, and other objects and advantages of the present disclosure that are not described can be understood by the following description and will be more clearly understood by various embodiments of the present disclosure. In addition, it will be able to be easily seen that the objects and advantages of the present disclosure may be achieved by devices and combinations thereof that are described in the claims.

According to an embodiment of the present disclosure, a marine glass fertilizer composition based on converter slag may serve as an eco-friendly source of iron, which uses a converter slag, which is a byproduct of the steel industry, to restore the marine ecosystem and promote the growth of marine plankton.

In addition, The present disclosure is also directed to providing a marine glass fertilizer composition based on a converter slag, which is designed to supply iron to seawater for a long time based on a glass structure in which converter slag powder obtained by crushing converter slag generated during a steelmaking process is mixed with a silicate or phosphate.

As a result, the marine glass fertilizer composition based on converter slag according to the embodiment of the present disclosure can contribute to the promotion of phytoplankton growth through iron supply and the absorption of atmospheric carbon dioxide through blue carbon.

To this end, the marine glass fertilizer composition based on converter slag according to the embodiment of the present disclosure is formed by mixing converter slag powder with silicate or phosphate, includes Fe₂O₃, SiO₂, CaO, and P₂O₅ as main components, and continuously elutes iron (Fe) ions in seawater.

To this end, the marine glass fertilizer composition based on converter slag according to the embodiment of the present disclosure is preferably a mixture of converter slag powder in an amount of 19 wt% to 85 wt% and a silicate or phosphate in an amount of 15 wt% to 81 wt%.

Here, the silicate-based marine glass fertilizer composition includes Fe₂O₃ in an amount of 27 wt% to 34 wt%, SiO₂ in an amount of 24 wt% to 38 wt%, CaO in an amount of 20 wt% to 28 wt%, Al₂O₃ in an amount of 5 wt% to 8 wt%, MgO in an amount of 2 wt% to 5 wt%, MnO in an amount of 2 wt% to 4 wt%, and P₂O₅ in an amount of 1 wt% to 3 wt%.

In addition, the silicate-based marine glass fertilizer composition may further include a total amount of 0.01 wt% to 2.0 wt% of one or more selected from SO₃, TiO₂, Na₂O, and K₂O.

When coming into contact with seawater, the silicate-based marine glass fertilizer composition forms an Fe(OH)₂ hydroxide layer, thereby promoting absorption of iron (Fe) by microorganisms.

Meanwhile, the phosphate-based marine glass fertilizer composition prepared by mixing phosphate into converter slag powder includes Fe₂O₃ in an amount of 18 wt% to 30 wt%, SiO₂ in an amount of 2 wt% to 4 wt%, CaO in an amount of 12 wt% to 18 wt%, Al₂O₃ in an amount of 0.3 wt% to 0.8 wt%, MgO in an amount of 0.4 wt% to 0.6 wt%, MnO in an amount of 1 wt% to 3 wt%, and P₂O₅ in an amount of 45 wt% to 65 wt%.

In addition, the phosphate-based marine glass fertilizer composition may further include a total amount of 0.01 wt% to 2.0 wt% of one or more selected from SO₃, TiO₂, Na₂O, and K₂O.

According to the present disclosure, iron (Fe), which is an essential nutrient for marine ecosystems, can be supplied.

As a result, according to the present disclosure, when iron is supplied to marine ecosystems, the growth of phytoplankton can be promoted and photosynthetic activity can be increased.

This increased photosynthesis can maximize the carbon fixation process, which converts atmospheric carbon dioxide into marine organic matter, thereby reducing atmospheric carbon dioxide concentrations.

In addition, according to the present disclosure, based on a chemically stable glass material, iron can be supplied for a long time, thereby enabling efficient restoration of marine ecosystems.

In addition, according to the present disclosure, the converter slag, which is a byproduct of the steel industry, can be recycled for ecosystem restoration, thereby creating added value and contributing to environmental purification through blue carbon.

Specific effects of the present disclosure together with the above effects will be described with a description of the following detailed matters for carrying out the disclosure.

### [BRIEF DESCRIPTION OF THE DRAWINGS]

FIG. 1 is a process flowchart illustrating a method of preparing a marine glass fertilizer based on converter slag according to an embodiment of the present disclosure.
FIG. 2 is a graph illustrating the results of a ToF-SIMS depth profile analysis of a surface of a silicate-based marine glass fertilizer prepared according to Example 5.
FIGS. 3 and 4 are photographs illustrating the results of a SEM-EDS analysis of the surface of the silicate-based marine glass fertilizer prepared according to Example 5.
FIG. 5 is a graph illustrating the total elution amount measured after a 168-hour elution experiment using phosphate-based marine glass fertilizers prepared according to Examples 6 to 9.

### [DETAILED DESCRIPTION OF THE DISCLOSURE]

The above objects, features, and advantages will be described below in detail with reference to the accompanying drawings, and thus those skilled in the art to which the present disclosure pertains will be able to easily carry out the technical spirit of the present disclosure. In describing the present disclosure, when it is determined that a detailed description of the known technology related to the present disclosure may unnecessarily obscure the gist of the present disclosure, a detailed description thereof will be omitted. Hereinafter, exemplary embodiments according to the present disclosure will be described in detail with reference to the accompanying drawings. In the drawings, the same reference numerals are used to denote the same or similar components.

The singular expression used herein includes the plural expression unless the context clearly dictates otherwise. In the application, terms such as "composed of" or "comprising" should not be construed as necessarily including all of the various components or operations described in the specification and should be construed as not including some of the components or some of the operations or further including additional components or operations.

Hereinafter, a marine glass fertilizer composition based on converter slag and a method of preparing a marine glass fertilizer according to some embodiments of the present disclosure will be described.

The marine glass fertilizer composition based on converter slag according to the embodiment of the present disclosure can be used as an eco-friendly iron source that uses converter slag, a byproduct of the steel industry, to restore the marine ecosystem and promote the growth of marine plankton.

In this way, the marine glass fertilizer composition based on converter slag according to the embodiment of the present disclosure are prepared by mixing a silicate or phosphate with converter slag powder, thereby slowly dissolving iron in a seawater environment, and in particular, the silicate-based marine glass fertilizer composition forms an Fe(OH)₂ hydroxide layer on a surface thereof, enabling microorganisms to directly absorb iron from the surface.

To this end, the marine glass fertilizer composition based on converter slag according to the embodiment of the present disclosure is prepared by mixing converter slag powder with a silicate or phosphate, includes Fe₂O₃, SiO₂, CaO, and P₂O₅ as main components, and continuously elutes iron (Fe) ions in seawater.

In addition, the marine glass fertilizer composition based on converter slag according to the embodiment of the present disclosure is preferably mixed with converter slag powder in an amount of 19 wt% to 85 wt% and a silicate or phosphate in an amount of 15 wt% to 81 wt%, and more preferably mixed with converter slag powder in an amount of 40 wt% to 75 wt% and a silicate or phosphate in an amount of 25 wt% to 60 wt%.

When the converter slag powder is added in an amount less than 19 wt%, the amount of converter slag, which is an industrial byproduct, used is too small, making it difficult to achieve the goal of recycling waste resources and using them for ecosystem restoration. Conversely, when the converter slag powder is excessively added in an amount of more than 85 wt%, there is a concern that glass may not be properly formed due to a relative decrease in the amount of silicate or phosphate added.

In the present disclosure, the silicate-based marine glass fertilizer composition prepared by mixing silicate into converter slag powder includes Fe₂O₃ in an amount of 27 wt% to 34 wt%, SiO₂ in an amount of 24 wt% to 38 wt%, CaO in an amount of 20 wt% to 28 wt%, Al₂O₃ in an amount of 5 wt% to 8 wt%, MgO in an amount of 2 wt% to 5 wt%, MnO in an amount of 2 wt% to 4 wt%, and P₂O₅ in an amount of 1 wt% to 3 wt%.

More preferably, the silicate-based marine glass fertilizer composition includes Fe₂O₃ in an amount of 28 wt% to 32 wt%, SiO₂ in an amount of 25 wt% to 37 wt%, CaO in an amount of 22 wt% to 26 wt%, Al₂O₃ in an amount of 5 wt% to 7 wt%, MgO in an amount of 2 wt% to 4 wt%, MnO in an amount of 2 wt% to 3 wt%, and P₂O₅ in an amount of 1 wt% to 2 wt%.

In addition, the silicate-based marine glass fertilizer composition may further include a total amount of 0.01 wt% to 2.0 wt% of one or more selected from SO₃, TiO₂, Na₂O, and K₂O.

When coming into contact with seawater, the silicate-based marine glass fertilizer composition forms an Fe(OH)₂ hydroxide layer, thereby promoting absorption of iron (Fe) by microorganisms. In this way, when coming into contact with seawater, the silicate-based marine glass fertilizer composition may form a Fe(OH)₂ hydroxide layer on the surface, allowing microorganisms to directly absorb iron from the surface.

Meanwhile, the phosphate-based marine glass fertilizer composition prepared by mixing phosphate into converter slag powder includes Fe₂O₃ in an amount of 18 wt% to 30 wt%, SiO₂ in an amount of 2 wt% to 4 wt%, CaO in an amount of 12 wt% to 18 wt%, Al₂O₃ in an amount of 0.3 wt% to 0.8 wt%, MgO in an amount of 0.4 wt% to 0.6 wt%, MnO in an amount of 1 wt% to 3 wt%, and P₂O₅ in an amount of 45 wt% to 65 wt%.

More preferably, the phosphate-based marine glass fertilizer composition includes Fe₂O₃ in an amount of 18 wt% to 28 wt%, SiO₂ in an amount of 2 wt% to 3 wt%, CaO in an amount of 12 wt% to 17 wt%, Al₂O₃ in an amount of 0.5 wt% to 0.6 wt%, MgO in an amount of 0.4 wt% to 0.5 wt%, MnO in an amount of 1 wt% to 2 wt%, and P₂O₅ in an amount of 47 wt% to 63 wt%.

In addition, the phosphate-based marine glass fertilizer composition may further include a total amount of 0.01 wt% to 2.0 wt% of one or more selected from SO₃, TiO₂, Na₂O, and K₂O.

The marine glass fertilizer composition based on converter slag according to the embodiment of the present disclosure may supply iron (Fe), which is an essential nutrient for the marine ecosystems.

As a result, the marine glass fertilizer composition based on converter slag according to the embodiment of the present disclosure can promote the growth of phytoplankton and increase photosynthetic activity when iron is supplied to the marine ecosystems.

This increased photosynthesis can maximize the carbon fixation process, which converts atmospheric carbon dioxide into marine organic matter, thereby reducing atmospheric carbon dioxide concentrations.

In addition, the marine glass fertilizer composition based on converter slag according to the embodiment of the present disclosure is based on a chemically stable glass material, enabling a long-term supply of iron, thereby efficiently restoring the marine ecosystems.

In addition, the marine glass fertilizer composition based on converter slag according to the embodiment of the present disclosure can create added value by recycling converter slag, which is a byproduct of the steel industry, for ecosystem restoration, and contribute to environmental purification through blue carbon.

Hereinafter, a method of preparing a marine glass fertilizer based on converter slag according to the embodiment of the present disclosure will be described with reference to the accompanying drawings.

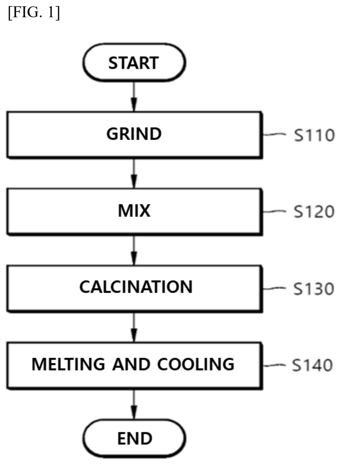

FIG. 1 is a process flowchart illustrating a method of preparing a marine glass fertilizer based on converter slag according to the embodiment of the present disclosure.

As illustrated in FIG. 1, the method of preparing a marine glass fertilizer based on converter slag according to the embodiment of the present disclosure includes a grinding operation S110, a mixing operation S120, a calcination operation S130, and a melting and cooling operation S140.

### Grinding

In the grinding operation S110, converter slag generated during the steelmaking process is ground to obtain converter slag powder.

The converter slag consists of various auxiliary materials added during the steelmaking process to refine molten iron into molten steel, as well as oxidation products of various elements in the molten iron, and typically, 50 kg to 100 kg of converter slag is generated per ton of molten steel produced. The converter slag contains a large amount of lime, primarily in the silicate or bistite phase.

In this case, grinding may be performed using any one of the commonly known ball mills, jet mills, and planetary mills.

Through this grinding, the converter slag is finely ground to produce converter slag powder. The converter slag powder preferably has an average diameter of 150 µm or less, and a more preferred range is an average particle diameter of 80 µm to 120 µm.

### Mixing

The converter slag powder obtained in the mixing operation S120 is mixed with a silicate or phosphate.

Here, the converter slag powder in an amount of 19 wt% to 85 wt% is preferably mixed with a silicate or phosphate in an amount of 15 wt% to 81 wt%, and the converter slag powder in an amount of 40 wt% to 75 wt% is more preferably mixed with the silicate or phosphate in an amount of 25 wt% to 60 wt%.

When the converter slag powder is added in an amount less than 19 wt%, the amount of converter slag, which is an industrial byproduct, used is too small, making it difficult to achieve the goal of recycling waste resources and using them for ecosystem restoration. Conversely, when the converter slag powder is excessively added in an amount of more than 85 wt%, there is a concern that glass may not be properly formed due to a relative decrease in the amount of silicate or phosphate added.

### calcination

In the calcination operation S130, the mixed slag mixture is calcined.

The calcination is performed to volatilize all carbon within the slag mixture. To this end, the calcination is preferably performed at 600 °C to 800 °C for 10 to 30 hours, and more preferably at 650 °C to 750 °C for 14 to 20 hours.

When the calcination temperature is less than 600 °C or the calcination time is less than 10 hours, there is a concern that the carbon in the slag mixture may not be completely volatilized. Conversely, when the calcination temperature exceeds 800 °C or the calcination time exceeds 30 hours, excessive energy and time are required, making it uneconomical.

### Melting and cooling

In the melting and cooling operation S140, the calcinated product is melted and then cooled to form a silicate-based or phosphate-based marine glass fertilizer.

In the present operation, melting is preferably performed at 1,200 °C to 1,450 °C for 30 to 90 minutes, and more preferably at 1,250 °C to 1,350 °C for 40 to 70 minutes. When the melting temperature is less than 1,250 °C or the melting time is less than 30 minutes, complete melting may not occur, leading to inmixing of the glass melt. Conversely, when the melting temperature exceeds 1,450 °C or the melting time exceeds 90 minutes, excessive energy and time are required, making the process uneconomical.

In the present operation, cooling may be performed using one or more of furnace cooling, air cooling, and water cooling methods, and amount them, rapid cooling using water cooling is more preferred.

After the melting and cooling operation S140, the silicate-based marine glass fertilizer contains Fe₂O₃ in an amount of 27 wt% to 34 wt%, SiO₂ in an amount of 24 wt% to 38 wt%, CaO in an amount of 20 wt% to 28 wt%, Al₂O₃ in an amount of 5 wt% to 8 wt%, MgO in an amount of 2 wt% to 5 wt%, MnO in an amount of 2 wt% to 4 wt%, and P₂O₅ in an amount of 1 wt% to 3 wt%.

More preferably, the silicate-based marine glass fertilizer composition includes Fe₂O₃ in an amount of 28 wt% to 32 wt%, SiO₂ in an amount of 25 wt% to 37 wt%, CaO in an amount of 22 wt% to 26 wt%, Al₂O₃ in an amount of 5 wt% to 7 wt%, MgO in an amount of 2 wt% to 4 wt%, MnO in an amount of 2 wt% to 3 wt%, and P₂O₅ in an amount of 1 wt% to 2 wt%.

In addition, the silicate-based marine glass fertilizer composition may further include a total amount of 0.01 wt% to 2.0 wt% of one or more selected from SO₃, TiO₂, Na₂O, and K₂O.

When coming into contact with seawater, the silicate-based marine glass fertilizer composition forms an Fe(OH)₂ hydroxide layer, thereby promoting absorption of iron (Fe) by microorganisms.

Meanwhile, the phosphate-based marine glass fertilizer composition prepared by mixing phosphate into converter slag powder includes Fe₂O₃ in an amount of 18 wt% to 30 wt%, SiO₂ in an amount of 2 wt% to 4 wt%, CaO in an amount of 12 wt% to 18 wt%, Al₂O₃ in an amount of 0.3 wt% to 0.8 wt%, MgO in an amount of 0.4 wt% to 0.6 wt%, MnO in an amount of 1 wt% to 3 wt%, and P₂O₅ in an amount of 45 wt% to 65 wt%.

More preferably, the phosphate-based marine glass fertilizer composition includes Fe₂O₃ in an amount of 18 wt% to 28 wt%, SiO₂ in an amount of 2 wt% to 3 wt%, CaO in an amount of 12 wt% to 17 wt%, Al₂O₃ in an amount of 0.5 wt% to 0.6 wt%, MgO in an amount of 0.4 wt% to 0.5 wt%, MnO in an amount of 1 wt% to 2 wt%, and P₂O₅ in an amount of 47 wt% to 63 wt%.

In addition, the phosphate-based marine glass fertilizer composition may further include a total amount of 0.01 wt% to 2.0 wt% of one or more selected from SO₃, TiO₂, Na₂O, and K₂O.

Through operations S110 to S140, the marine glass fertilizer based on converter slag according to the embodiment of the present disclosure may be prepared.

The marine glass fertilizer based on converter slag prepared according to the method of the embodiment of the present disclosure may supply iron (Fe), which is an essential nutrient for the marine ecosystems.

As a result, the marine glass fertilizer based on converter slag according to the embodiment of the present disclosure can promote the growth of phytoplankton and increase photosynthetic activity when iron is supplied to the marine ecosystems.

This increased photosynthesis can maximize the carbon fixation process, which converts atmospheric carbon dioxide into marine organic matter, thereby reducing atmospheric carbon dioxide concentrations.

In addition, the marine glass fertilizer based on converter slag according to the embodiment of the present disclosure is based on a chemically stable glass material, enabling a long-term supply of iron, thereby efficiently restoring the marine ecosystems.

In addition, the marine glass fertilizer based on converter slag according to the embodiment of the present disclosure can create added value by recycling converter slag, which is a byproduct of the steel industry, for ecosystem restoration, and contribute to environmental purification through blue carbon.

### Examples

Hereinafter, the configuration and operation of the present disclosure will be described in more detail through various exemplary examples of the present disclosure. However, this is suggested as exemplary examples of the present disclosure and may not be construed as limiting the present disclosure thereby in any sense.

Since descriptions not provided in this section may be technically inferred by those skilled in the art, the descriptions thereof will be omitted.

### 1. Manufacturing of silicate-based marine glass fertilizer

### Examples 1 to 5

Converter slag having compositions and composition ratios listed in Table 1 was ball-milled to obtain converter slag powder having an average diameter of 110 µm.

Next, converter slag powder in an amount of 65 wt% and silicate in an amount of 35 wt% were mixed, and the mixed slag mixture was calcined at 700 °C for 16 hours.

Next, the calcined product was melted at 1,350 °C for 60 minutes and rapidly cooled using water cooling to prepare silicate-based marine glass fertilizers according to Examples 1 to 5.

**[Table 1] (units: wt%)**

| **Items** | **Example 1** | **Example 2** | **Example 3** | **Example 4** | **Example 5** |
|---|---|---|---|---|---|
| **Fe₂O₃** | **32.98** | **32.49** | **30.44** | **28.23** | **32.98** |
| **SiO₂** | **25.94** | **28.97** | **33.05** | **37.67** | **25.94** |
| **CaO** | **26.14** | **23.73** | **22.11** | **20.28** | **26.14** |
| **Al₂O₃** | **5.88** | **6.37** | **6.46** | **6.53** | **5.88** |
| **MgO** | **3.49** | **3.36** | **3.15** | **2.95** | **3.49** |
| **MnO** | **2.96** | **2.79** | **2.66** | **2.47** | **2.96** |
| **P₂O₅** | **1.79** | **1.55** | **1.45** | **1.32** | **1.79** |
| **SO₃** | **0.04** | **0.04** | **0.04** | **0.04** | **0.04** |
| **TiO₂** | **0.67** | **0.63** | **0.58** | **0.48** | **0.67** |
| **Na₂O** | **0.11** | **0.07** | **0.06** | **0.03** | **0.11** |

### 2. Elution experiment of silicate-based marine glass fertilizer

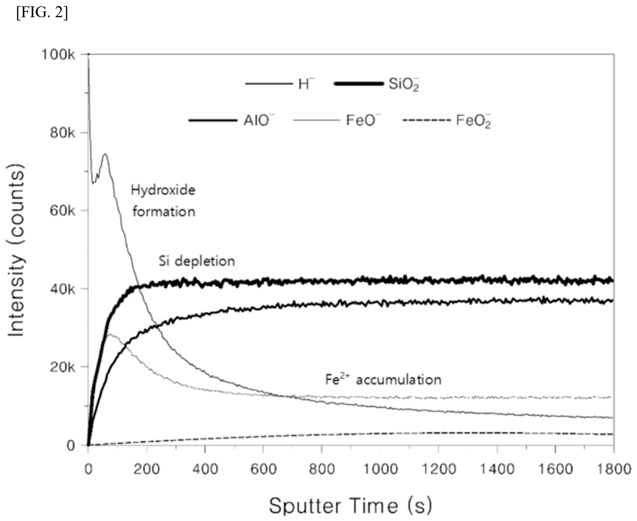

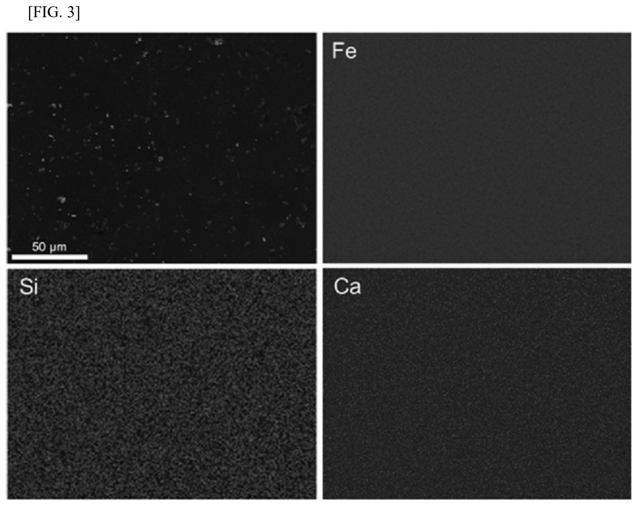

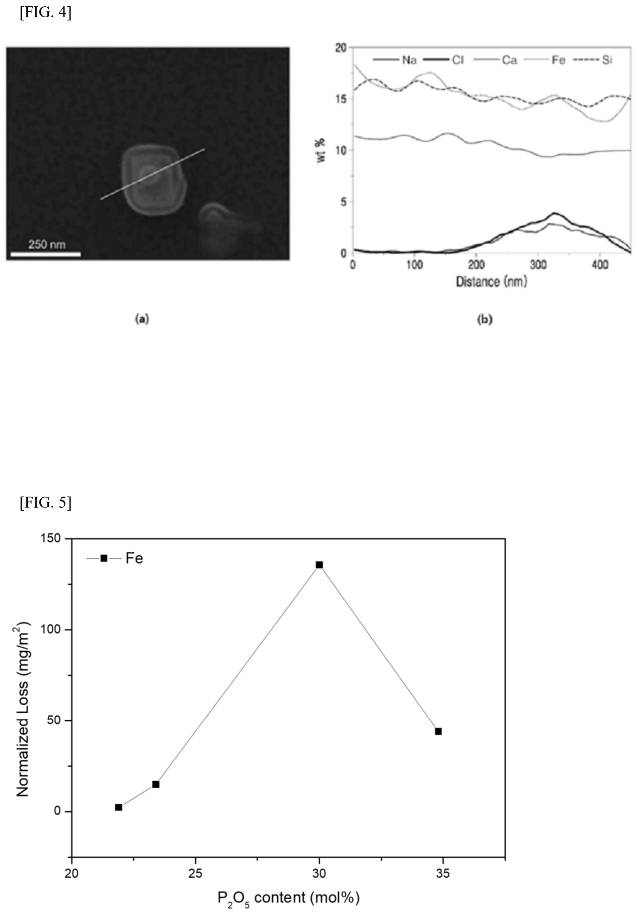

FIG. 2 is a graph illustrating the results of a ToF-SIMS depth profile analysis of the surface of the silicate-based marine glass fertilizer prepared according to Example 5, and FIGS. 3 and 4 are photographs illustrating the results of a SEM-EDS analysis of the surface of the silicate-based marine glass fertilizer prepared according to Example 5. In this case, the silicate-based marine glass fertilizer prepared according to Example 5 was exposed to an artificial seawater solution at room temperature (20 °C) for 4 days, and then ToF-SIMS depth profile analysis and SEM analysis were performed on the surface of the corroded silicate-based marine glass fertilizer.

Here, FIG. 4A is a magnified SEM photograph of the surface of the silicate-based marine glass fertilizer prepared according to Example 5, and FIG. 4B is a graph illustrating the results of an EDS analysis of the surface of the silicate-based marine glass fertilizer prepared according to Example 5.

As illustrated in FIGS. 2 to 4, the results of the elution experiment over a four-day period confirmed the formation of an Fe(OH)₂ hydroxide layer on the surface of the silicate-based marine glass fertilizer prepared according to Example 5 when exposed to artificial seawater. This is demonstrated in the ToF-SIMS depth profile analysis results in FIG. 2 and the SEM-EDS analysis results of the corroded surface in FIG. 3.

In addition, as illustrated in FIG. 4, the silicate-based marine glass fertilizer prepared according to Example 5 also showed the formation of NaCl crystals on the surface.

### 3. Manufacturing of phosphate-based marine glass fertilizer

### Examples 6 to 9

Converter slag having compositions and composition ratios listed in Table 2 was ball-milled to obtain converter slag powder having an average diameter of 100 µm.

Next, converter slag powder in an amount of 60 wt% and phosphate in an amount of 40 wt% were mixed, and the mixed slag mixture was calcined at 700 °C for 16 hours.

Next, the calcined product was melted at 1,350 °C for 60 minutes and rapidly cooled using water cooling to prepare phosphate-based marine glass fertilizers according to Examples 6 to 9.

**[Table 2] (units: wt%)**

| **Items** | **Example 6** | **Example 7** | **Example 8** | **Example 9** |
|---|---|---|---|---|
| **Fe₂O₃** | **28** | **25.9** | **20.5** | **18.3** |
| **SiO₂** | **3.23** | **3.07** | **2.61** | **2.47** |
| **CaO** | **17.03** | **17.02** | **14.71** | **12.5** |
| **Al₂O₃** | **0.61** | **0.55** | **0.49** | **0.5** |
| **MgO** | **0.5** | **0.5** | **0.47** | **0.42** |
| **MnO** | **2.3** | **2.33** | **1.91** | **1.6** |
| **P₂O₅** | **47.4** | **50** | **58.8** | **63.8** |
| **SO₃** | **0.02** | **0.07** | **0.03** | **0.02** |
| **TiO₂** | **0.85** | **0.5** | **0.4** | **0.34** |
| **Na₂O** | **0.03** | **0.02** | **0.05** | **0.03** |
| **K₂O** | **0.03** | **0.04** | **0.03** | **0.02** |

### 4. Elution experiment of phosphate-based marine glass fertilizer

Table 3 is a graph illustrating the results of elution measurements of phosphate-based marine glass fertilizers prepared according to Examples 6 to 9, and FIG. 5 is a graph illustrating the total elution amount measured after 168 hours of elution testing using phosphate-based marine glass fertilizers prepared according to Examples 6 to 9. In this case, the phosphate-based marine glass fertilizers prepared according to Examples 6 to 9 were ground to an average diameter of 70 µm, and 3 g of the ground phosphate-based marine glass fertilizer powder was placed in a polypropylene container containing 30 ml of artificial seawater solution to conduct the elution experiment.

**<Table 3>**

| **Fe elution amount** (mg/m') | | | |
|---|---|---|---|
| **Time (h)** | **24** | **72** | **168** |
| **Example 6** | **1.98** | **2.20** | **2.25** |
| **Example 7** | **7.66** | **13.56** | **14.81** |
| **Example 8** | **12.98** | **90.89** | **135.71** |
| **Example 9** | **15.53** | **29.52** | **43.95** |

As shown in Table 3 and FIG. 5, the results of elution experiments using the phosphate-based marine glass fertilizers prepared in Examples 6 to 9 are presented. In this case, the solutions were recovered 24, 72, and 168 hours after the start of elution using the phosphate-based marine glass fertilizers prepared in Examples 6 to 9, and the Fe element concentrations were measured, and the resulting elution amounts were calculated and shown in Table 3

In addition, FIG. 5 is a graph illustrating the total elution amount measured after a 168-hour elution experiment using phosphate-based marine glass fertilizers prepared according to Examples 6 to 9. In this case, as in Examples 6 to 8, as the content of P₂O₅ increased, the total elution amount increased linearly after 168 hours of elution experiment, but as in Example 9, when the content of P₂O₅ was added excessively at 63.8 wt%, it was confirmed that the total elution amount decreased after 168 hours of elution experiment.

Although the present disclosure has been described above with reference to the exemplary drawings, the present disclosure is not limited by the embodiments and drawings disclosed in the present specification, and it is obvious that various modifications can be made by those skilled in the art within the scope of the technical spirit of the present disclosure. In addition, even when the operational effects according to the configuration of the present disclosure have not been explicitly described in the description of the embodiments of the present disclosure, it goes without saying that the effects predictable by the corresponding configuration should be recognized.

### DESCRIPTION OF REFERENCE NUMERALS

S110: grinding operation
S120: mixing operation
S130: calcination operation
S140: melting and cooling operation

## Claims

1. A marine glass fertilizer composition based on converter slag prepared by mixing a silicate or phosphate with converter slag powder,
wherein the marine glass fertilizer composition
mainly includes Fe₂O₃, SiO₂, CaO, and P₂O₅, and
continuously elutes iron (Fe) ions in seawater.

2. The marine glass fertilizer composition based on converter slag of claim 1, wherein the marine glass fertilizer composition includes the converter slag powder in an amount of 19 wt% to 85 wt% and a silicate or phosphate in an amount of 15 wt% to 81 wt%.

3. The marine glass fertilizer composition based on converter slag of claim 1 or 2, wherein (e.g., the marine glass fertilizer composition as) a silicate-based marine glass fertilizer composition prepared by mixing a or the silicate with the converter slag powder includes
Fe₂O₃ in an amount of 27 wt% to 34 wt%,
SiO₂ in an amount of 24 wt% to 38 wt%,
CaO in an amount of 20 to 28 wt%,
Al₂O₃ in an amount of 5 wt% to 8 wt%,
MgO in an amount of 2 wt% to 5 wt%,
MnO in an amount of 2 to 4 wt%, and
P₂O₅ in an amount of 1 wt% to 3 wt%.

4. The marine glass fertilizer composition based on converter slag of claim 3, wherein the silicate-based marine glass fertilizer composition further includes a total 0.01 wt% to 2.0 wt% of one or more of SO₃, TiO₂, Na₂O, and K₂O.

5. The marine glass fertilizer composition based on converter slag of any one of claims 1 to 4, wherein, when coming into contact with seawater, the silicate-based marine glass fertilizer composition forms an Fe(OH)₂ hydroxide layer, thereby promoting absorption of iron, Fe, by microorganisms.

6. The marine glass fertilizer composition based on converter slag of claim 1 or 2, or of claim 5 when depending on claim 1 or 2, wherein (e.g., the marine glass fertilizer composition as) a phosphate-based marine glass fertilizer composition prepared by mixing a or the phosphate with the converter slag powder includes Fe₂O₃ in an amount of 18 wt% to 30 wt%,
SiO₂ in an amount of 2 wt% to 4 wt%,
CaO in an amount of 12 to 18 wt%,
Al₂O₃ in an amount of 0.3 wt% to 0.8 wt%,
MgO in an amount of 0.4 to 0.6,
MnO in an amount of 1 to 3 wt%, and
P₂O₅ in an amount of 45 wt% to 65 wt%.

7. The marine glass fertilizer composition based on converter slag of claim 6, wherein the phosphate-based marine glass fertilizer composition further includes a total 0.01 wt% to 2.0 wt% of one or more of SO₃, TiO₂, Na₂O, and K₂O.
